(19) **Europäisches Patentamt**
**European Patent Office**
**Office européen des brevets**

(11) **EP 1 944 267 A1**

(12) **EUROPEAN PATENT APPLICATION**
published in accordance with Art. 153(4) EPC

(43) Date of publication:
**16.07.2008 Bulletin 2008/29**

(51) Int Cl.:
*B82B 1/00* (2006.01)     *B82B 3/00* (2006.01)
*F16B 5/07* (2006.01)     *A44B 18/00* (2006.01)

(21) Application number: **06782613.1**

(22) Date of filing: **10.08.2006**

(86) International application number:
**PCT/JP2006/315809**

(87) International publication number:
**WO 2007/032164 (22.03.2007 Gazette 2007/12)**

(84) Designated Contracting States:
**DE FR GB**

(30) Priority: **12.09.2005 JP 2005263762**

(71) Applicant: **Nissan Motor Company Limited**
**Kanagawa-ku**
**Yokohama-shi, Kanagawa 221-0023 (JP)**

(72) Inventors:
 • **FUKUI, Takayuki**
  **Kanagawa 243-0123 (JP)**

 • **SHIBUKAWA, Toshiya**
  **Kanagawa 243-0123 (JP)**

(74) Representative: **Schaeberle, Steffen et al**
**Hoefer & Partner**
**Patentanwälte**
**Pilgersheimer Strasse 20**
**81543 München (DE)**

(54) **JOINABLE STRUCTURE AND PROCESS FOR PRODUCING THE SAME**

(57)     An adhesive structure of the present invention is capable of adhering onto an adhesion target without using welding, an adhesive or the like. The adhesive structure of the present invention includes: a base (4); and a plurality of protrusions, in which tip ends are spherical with a radius of 300 nm or less, and a radius of cross sections perpendicular to a longitudinal direction is 300 nm or less, the protrusions being provided on a surface of the base (4).

## FIG. 1

## Description

TECHNICAL FIELD

The present invention relates to an adhesive structure and a manufacturing method thereof. More specifically, the present invention relates to an adhesive structure that forms a minute structure on a surface of a base thereof, thus being capable of adhering onto an adhesion target without using welding, an adhesive; or the like, and relates to a manufacturing method of the adhesive structure.

BACKGROUND ART

Heretofore, adhesion using welding or an adhesive, adhesion using an interposed fastening member such as a hook-and-loop fastener and a bolt, and the like have been employed in adhesion of materials.

DISCLOSURE OF INVENTION

However, in manufacturing processes of these adhesive structures, for example, there have existed adhesive materials such as the bolt, the hook-and-loop fastener body and the adhesive, and fastening apparatuses such as a tooling machine for fastening the bolt, an adhesive coating machine and a spot welding machine, and accordingly, there have been various problems owing to restrictions caused therefrom. For example, in the welding, the welding apparatus and a spark prevention measure have been required, and in the adhesive, a countermeasure has been required, which is against a work environment where a solvent volatilizes and adheres onto clothes of a worker. Moreover, also in the case of the adhesion by the hook-and-loop fastener, the adhesive has been used for fixing the hook-and-loop fastener itself to an adhesion target.

In order to solve these problems, such a countermeasure of changing the adhesive to a non-solvent adhesive of a hot-melt type has been taken in the field of the environment; however, as steps, there have been a coating step and a heating step, and accordingly, there have been problems such as an increase of working hours and an increase of cost. Moreover, also in the welding, friction welding and the like have been developed; however, even in this case, development and introduction of new equipment have been required, which has not leaded to reduction of the hours required for the steps and reduction of the cost.

Meanwhile, there have been proposed a functional board and a functional device, which include a group of minute protrusions of organic polymer, and proposed a microbiochip and an optical device, which use these minute protrusions (refer to Japanese Patent Unexamined Publication No. 2004-170935).

The present invention has been made in order to solve the above-described problems. It is an object of the present invention to provide an adhesive structure capable of adhering onto the adhesion target without requiring the adhesive materials or the adhesion apparatuses, such as the welding and the adhesive, and to provide a manufacturing method of the adhesive structure.

An adhesive structure according to a first aspect of the present invention includes: a base; and a plurality of protrusions, in which tip ends are spherical with a radius of 300 nm or less, and a radius of cross sections perpendicular to a longitudinal direction is 300 nm or less, the protrusions being provided on a surface of the base.

A method of manufacturing an adhesive structure according to a second aspect of the present invention includes the steps of: forming protrusions, in which tip ends are spherical with a radius of 300 nm or less, and a radius of cross sections perpendicular to a longitudinal direction is 300 nm or less; and providing the protrusions on a surface of a base.

BRIEF DESCRIPTION OF THE DRAWINGS

[fig. 1] FIG. 1 is a perspective view showing an example of an adhesive structure of the present invention.
[fig. 2] FIG. 2 is a schematic view explaining van der Waals force.
[fig. 3] FIG. 3 is a schematic view showing a mechanism where the adhesive structure of the present invention exerts adhesive force.
[fig. 4] FIG. 4 is a schematic cross-sectional view showing examples of tip ends of protrusions.
[fig. 5] FIG. 5 is a graph showing a relationship between a radius of the tip ends of the protrusions and the adhesive force.
[fig. 6] FIG. 6 is a cross-sectional view showing other examples of the adhesive structure of the present invention.
[fig. 7] FIG. 7 is a schematic view showing steps of a nanoimprinting method.
[fig. 8] FIG. 8 is a schematic view showing a process of a UV curing method.
[fig. 9] FIG. 9 is a table showing evaluation conditions and evaluation results of examples and a comparative example.
[fig. 10] FIG. 10 is a graph showing relationships between the radii of the tip ends and the adhesive forces in a case where the protrusions are made of polystyrene.
[fig. 11] FIG. 11 is a graph showing relationships between the radii of the tip ends and the adhesive forces in a case where the protrusions are made of 6-Nylon.
[fig. 12] FIG. 12 is a graph showing relationships between the radii of the tip ends and the adhesive forces in a case where the protrusions are made of polypropylene.

BEST MODE FOR CARRYING OUT THE INVENTION

A description will be made below in detail of embodiments of an adhesive structure of the present invention and a manufacturing method thereof based on the drawings.

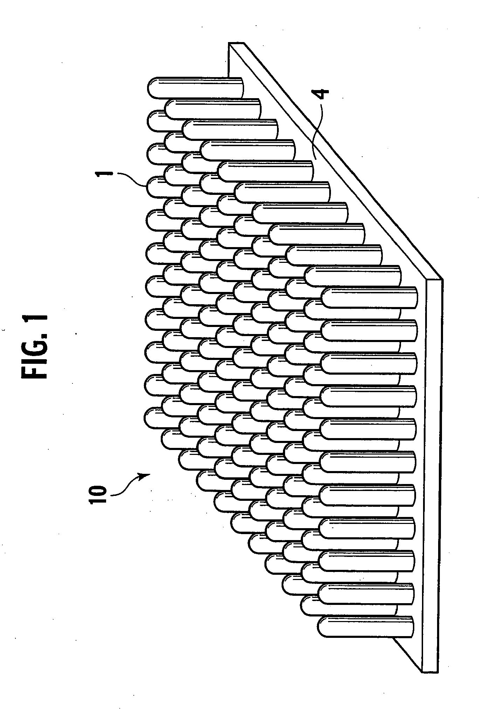

As shown in FIG. 1, in an adhesive structure 10 of the present invention, a plurality of protrusions 1 are provided on a surface of a base 4. Then, the protrusions 1 have a columnar structure in which a radius of cross sections perpendicular to a longitudinal direction is 500 nm or less. In such a way, by using van der Waals force acting between the protrusions 1 and an adhesion target 2, materials can be adhered onto each other without requiring an adhesive member such as an adhesive or an apparatus for executing the adhesion.

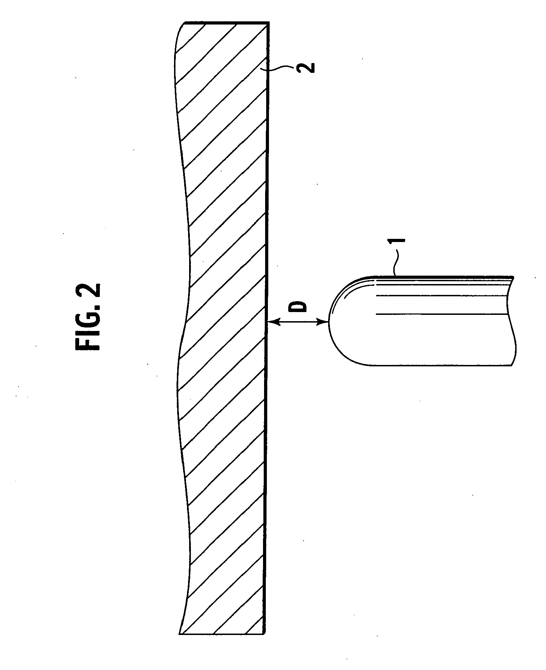

Specifically, as shown in FIG. 2, van der Waals force represented by the following general expression (1) acts among atoms.

$$ F \propto A / D^2 \qquad (1) $$

In the expression (1), algebraic symbol A indicates a constant depending on a dielectric constant of a material of the protrusions, and algebraic symbol D indicates a nearest distance between the protrusions 1 and the adhesion target 2.

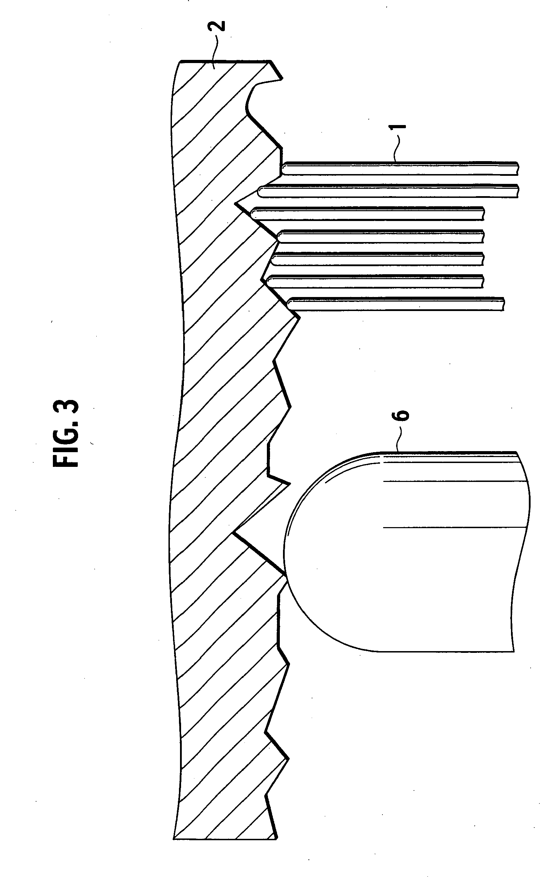

As shown in FIG. 3, the adhesive structure 10 of the present invention includes the plurality of protrusions 1 of a nanometer level, and accordingly, in comparison with a protrusion 6 of a micrometer level, the protrusions 1 enter irregularities of a surface of the adhesion target 2 by the nanometer level, and can exert strong adhesive force. Note that, in order to exert such adhesive force, it is necessary that the protrusions 1 and the adhesion target 2 come close to each other at an interatomic bond distance between atoms composing the protrusions 1 and atoms composing the adhesion target 2.

The protrusions 1 in the adhesive structure 10 of the present invention have the columnar structure in which the radius of the cross sections of the protrusions 1, which are perpendicular to the longitudinal direction thereof, is 500 nm or less. When the radius of the protrusions exceeds 500 nm, the protrusions 1 are hindered from entering the minute irregularities of the surface of the adhesion target 2, and the van der Waals force comes not to act therebetween. Meanwhile, when the radius is less than 50 nm, the adjacent protrusions 1 sometimes stick to one another. Hence, the radius of the cross sections of the protrusions 1 is preferably within a range of 50 to 500 nm, more preferably, 50 to 300 nm inclusive.

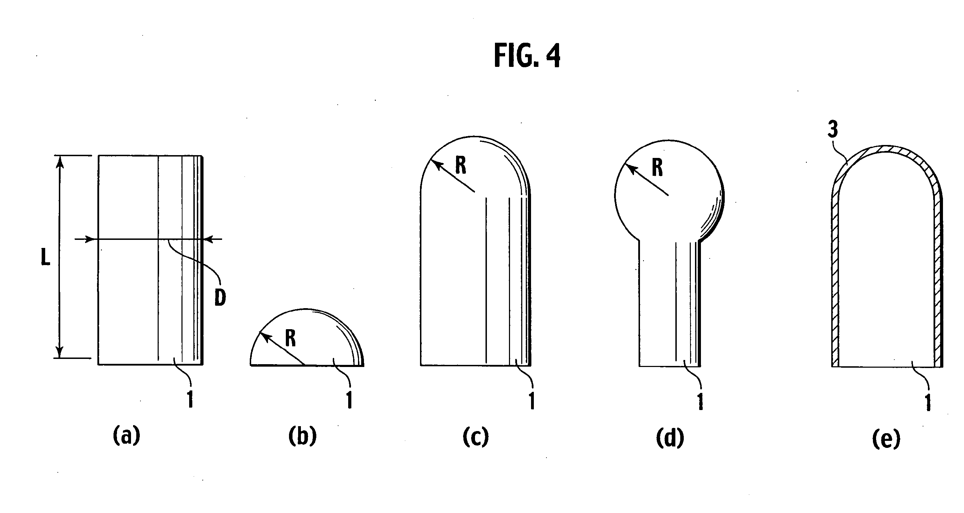

Here, as shown in (a) to (d) of FIG. 4, each of the protrusions 1 can be formed into a variety of shapes. Specifically, the entirety of the protrusion may be columnar as shown in (a), or the protrusion may be semispherical as shown in (b). Moreover, only a tip end of the columnar protrusion may be semispherical as shown in (c), or the tip end of the protrusion may be spherical as shown in (d). Among them, it is particularly preferable that the shape of the tip end portion of the protrusion 1 be spherical. By the fact that the shape of the tip end is spherical, it becomes easier for the protrusions to enter the minute irregular structure of such an adhesion target surface, thus making it possible to generate strong van der Waals force between the protrusions and the adhesion target. Note that, when the shape of the tip ends of the protrusions is spherical or semispherical, that is, when the tip ends of the protrusions are spherical, it is preferable that a radius (curvature radius) R of spheres be 300 nm or less. Moreover, it is preferable that the radius R of the spheres be within a range of 50 to 300 nm based on a relationship thereof with the radius of the cross sections of the protrusions 1. Note that, in this specification, the term "spherical" incorporates not only the spherical shape but also an oval shape or a shape similar thereto.

Moreover, as shown in FIG. 3, the protrusions 1 may have a shape in which such a cross-sectional radius is gradually decreased from base portions to the tip end portions. However, also in this case, it is preferable that the tip ends of the protrusions be spherical or semispherical.

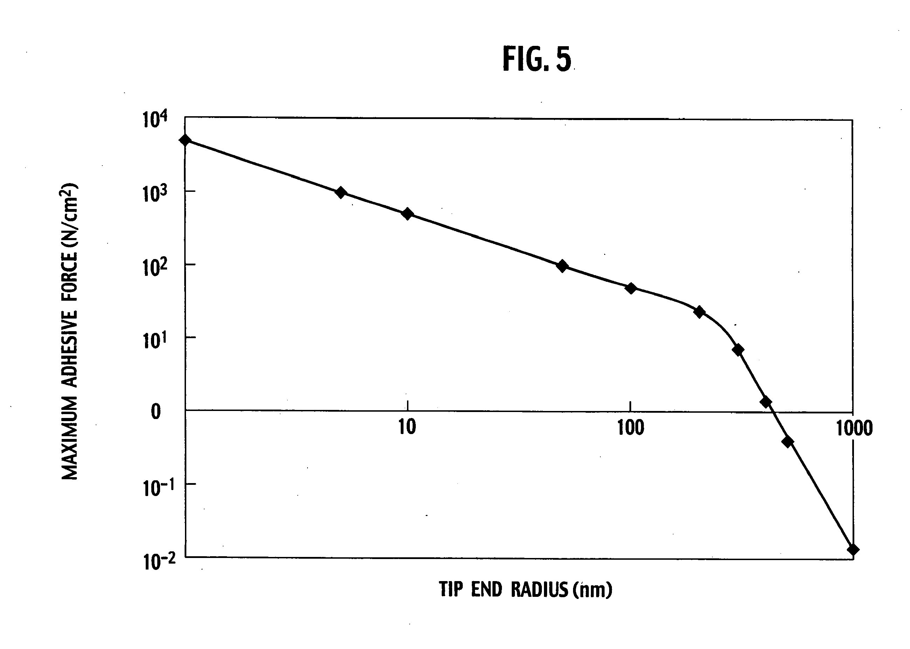

FIG. 5 shows a relationship between such a tip end radius of the protrusions and the adhesive force. In the conventional hook-and-loop fastener, adhesion strength thereof is approximately 20 to 40 N/cm². Meanwhile, in this embodiment, as a graph in FIG. 5 shows, stronger adhesive force than heretofore can be obtained if the tip end radius R of the protrusions is 300 nm or less.

Note that a shape of the cross sections of the protrusions 1, which are with respect to the longitudinal direction thereof, is preferably circular; however, without being limited to this, the shape may be polygonal such as tetragonal and pentagonal.

Moreover, it is preferable that the above-described protrusions be made of a material with a dielectric constant of 2 or more (ASTMD 150, @ 1 MHz, 20°C). When the dielectric constant is less than 2, the van der Waals force acting on the tip ends of the protrusions is not sufficient, and the adhesion strength is prone to be insufficient.

Furthermore, from a viewpoint of controlling the dielectric constant of the material, it is preferable that the protrusions be made of a composite material containing a conductive substance. As such a conductive substance, there can be mentioned: a carbon raw material such as carbon black, graphite, black lead and carbon nanotube; particles of metal such as copper, silver and nickel; indium tin oxide; titanium oxide; metal fiber such as stainless steel fiber; and the like.

Still further, it is preferable that the material of the above-described protrusions be resin. In the case where the protrusions are composed of the resin, when the protrusions contact the surface of the adhesion target, the protrusions are deformed owing to flexibility/collapsibility of the resin, whereby the number of contacts with the minute irregularities of the surface of the adhesion target is increased, thus making it possible to further ensure the adhesion strength. As the resin composing the protrusions, there can be suitably used: acrylic resin such as polymethacrylate and polyacrylate; polyamide resin such as 6-Nylon and 6,6-Nylon; polyolefin resin such as polystyrene, polyethylene and polypropylene; polyvinyl chloride; polyurethane; polycarbonate; polyacetal; polytetrafluoroethylene; and the like. Moreover, a composite resin material such as a particle reinforced one, a fiber reinforced one and a mineral reinforced one can also be suitably used.

Moreover, from a viewpoint of the flexibility/collapsibility of the protrusions, it is preferable that a bending elastic modulus of the protrusions be 5 GPa or less. When the bending elastic modulus exceeds 5 GPa, it becomes difficult to ensure the flexibility for allowing the protrusions to follow the shape of the minute irregularities of the adhesion target.

Furthermore, it is more preferable that the resin composing the above-described protrusions be a material of which dielectric constant and bending elastic modulus belong to the above-described ranges.

Moreover, it is preferable that an aspect ratio of the above-described protrusions be within a range of 1 to 15. When the aspect ratio is less than 1, it becomes difficult for the protrusions to follow the adhesion target, and the entire adhesion strength becomes prone to be decreased. When the aspect ratio exceeds 15, the protrusions are sometimes broken by a pressing pressure. It is more preferable that the aspect ratio be within a range of 1 to 4. In this case, the protrusions are less likely to collapse at the time of manufacture thereof, and a yield thereof can be improved. Note that, in this specification, as shown in FIG. 4(a), the aspect ratio is a value obtained by dividing a length L of each protrusion by a cross-sectional diameter D thereof. Moreover, the cross-sectional diameter D is a cross-sectional diameter of the protrusion at a midpoint of the length L.

In the adhesive structure of the present invention, it is possible to coat, on the above-described protrusions, a thin film with a thickness of 300 nm or less. Specifically, as shown in FIG. 4(e), a thin film 3 can be formed on the entirety of each protrusion 1. In this case, when the thickness of the thin film exceeds 300 nm, the tip end radius of the protrusions becomes too large, and the protrusions cannot enter the minute irregularities of the surface of the adhesion target, and the van der Waals force is prone to be hindered from being exerted. Like the above-described protrusions, it is preferable that a material composing the thin film has a dielectric constant of 2 or more. Moreover, in a similar way, it is preferable that the material composing the thin film be a composite material composed by being added with the resin and the conductive substance like the above-described protrusions.

Note that the protrusions may have a hollow shape formed of only the thin film. Typically, it is possible to form such a thin film by chemical vapor deposition (CVD) and physical vapor deposition (PVD), which use a vacuum state, a plasma state and the like, dipping into a solution, and the like.

Moreover, while the adhesive structure of the present invention is composed by forming the plurality of minute protrusions 1 on the base 4 as shown in FIG. 1, it is preferable that such protrusions be provided in such a high density of approximately $10^6$ to $10^{11}$ pieces per 1 $cm^2$ of the base.

Furthermore, the adhesive structure of the present invention can be provided with a distribution of the adhesion strength. For example, the protrusions are arrayed while setting a distance among the protrusions at an unequal pitch, thus making it possible to easily peel the adhesive structure from the adhesion target in the case of reusing or tearing down the adhesive structure firmly adhered thereonto. Moreover, it is possible to set the unequal pitch of the protrusions freely in any of lengthwise, crosswise and oblique directions. Furthermore, it is also possible to set such an inter-protrusion distance for each of the protrusions or for each of units, each of which is formed by combining an arbitrary number of the protrusions.

Moreover, it is possible to form the protrusions integrally with the surface of the base by a transcription method, an injection molding method, and the like. These methods enable the protrusions to be formed also on a surface of the composite resin material. In the resin material into which a reinforcement material (filler) is mixed, in general, the reinforcement material is not exposed to the surface of the resin material, but is covered with a resin layer. Accordingly, a resin component of the surface is softened and molded, whereby the protrusions composed only of the resin component can be obtained.

In the adhesive structure of the present invention, the same material as that of the protrusions 1 can be used as the base 4 on which the protrusions 1 are formed. Besides the above, a variety of materials can be appropriately selected and used according to purposes. For example, a metal oxide such as alumina, resin such as polyimide resin and epoxy resin, metals such as aluminum, silicon, iron, titanium and magnesium, glass, and the like can be used.

Moreover, the hook-and-loop fastener can also be obtained by using the adhesive structure of the present invention. Specifically, in two of the adhesive structures, surfaces thereof on which the protrusions are formed are contacted with each other, whereby the hook-and-loop fastener can be obtained. The surfaces of the adhesive structures, on which the protrusions are formed, are contacted with each other, whereby the van der Waals force acts between the protrusions, and the adhesive structures can be firmly adhered onto each other.

Next, a description will be made of the manufacturing method of the adhesive structure of the present invention.

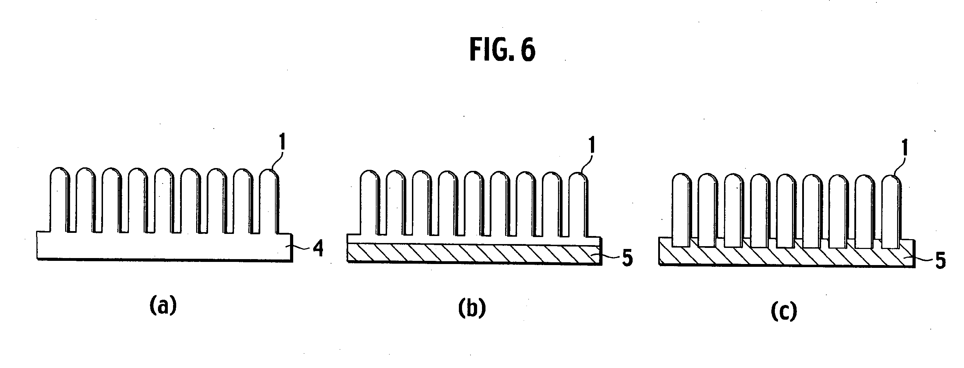

In the manufacturing method of the present invention, the protrusions 1 and the base 4 are integrally formed by the transcription method, whereby the above-described adhesive structure is obtained. For example, it is possible to form the protrusions by so-called stamp molding of heating the base, thrusting a molding die against the base, and flowing the resin therein (refer to FIG. 6(a)).

Moreover, in another manufacturing method of the present invention, the protrusions 1 and a base 5 are formed separately from each other, and then the protrusions 1 and the base 5 are integrated with each other, whereby the above-described adhesive structure can be obtained. Specifically, after the protrusions 1 are formed on a film or the like in advance, the protrusions 1 are integrated with the base 5 made of the glass, the metal, the ceramics, the resin or the like, whereby the adhesive structure can be obtained (refer to FIG. 6(b)). Moreover, the protrusions 1 fabricated separately are embedded onto a surface of the base 5, thus also making it possible to form the adhesive structure (refer to FIG. 6(c)).

Here, the transcription method (nanoimprinting method) is a method capable of producing ultraprecise resin surfaces in quantity at low cost by a molding die processed minutely to a nanometer size. As the die (stamper) for use, there are dies in which grooves are formed on silicon, ceramics (SiC) and the like by an electron beam lithography method, metal dies formed by inversion of these by electroforming, and the like. Moreover, as the transcription method, there are a heating type (hot-emboss method), an ultraviolet curing type (UV curing method), and the like.

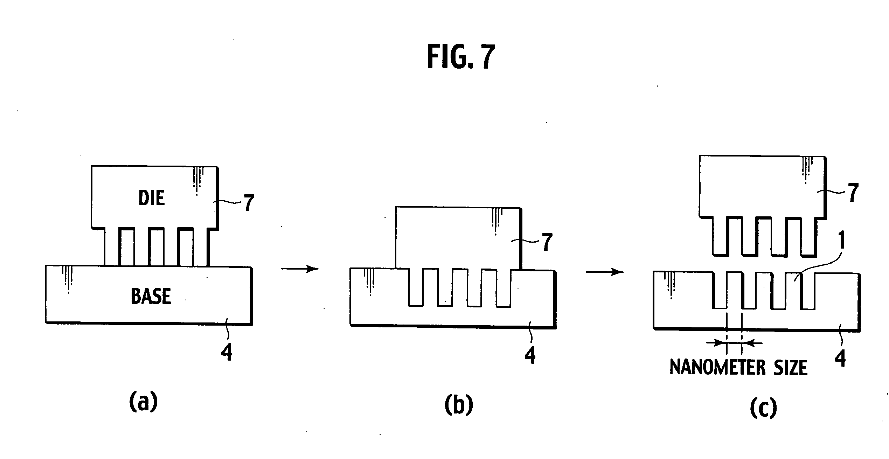

FIG. 7 shows a nanoimprinting process by the hot-emboss method. First, the base 4 made of the resin or the like is heated up to a glass transition temperature (FIG. 7(a)), and thereafter, a molding die 7 processed minutely is thrust against the base 4 (FIG. 7(b)). Then, the base 4 is cooled while the molding die 7 is keeping on being thrust thereagainst, and the molding die 7 is released therefrom, thus making it possible to obtain the adhesive structure on which the protrusions 1 of the nanometer size are formed (FIG. 7(c)).

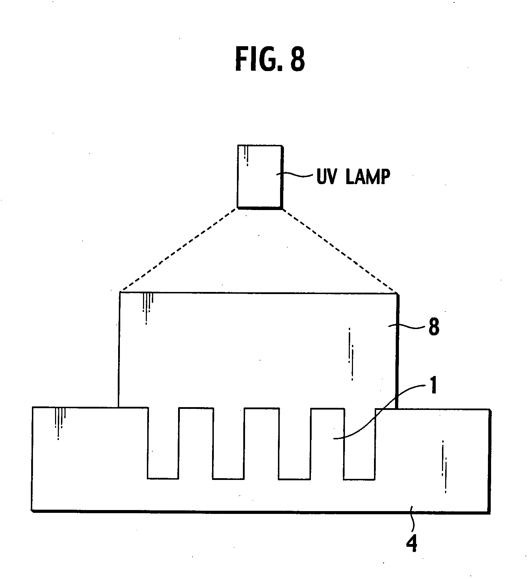

FIG. 8 shows a nanoimprinting process by the UV curing method. In the UV curing method, a transparent substance such as quartz is used as the mold. Specifically, as shown in FIG. 8, a molding die 8 is thrust against the base 4 made of ultraviolet curing resin, thereafter, an ultraviolet ray is irradiated onto the base through the mold, whereby the resin is cured, and the molding die 8 is released from the base, thus making it possible to obtain the adhesive structure on which the protrusions 1 of the nanometer size are formed.

The present invention will be described below more in detail by examples and a comparative example; however, the present invention is not limited to these examples.

(Evaluation Method)

In each of the examples, the adhesive force and the dielectric constant were measured by the following methods.

<Adhesive Force>

Glass, iron plates, silicon wafers were used as the adhesion targets. Each of the adhesion targets was mounted on the surface having the protrusions, and a load of 100 g was applied thereto, and the adhesion target and the surface were left standing for 30 minutes. Thereafter, the adhesion strength was measured by tensile strength.

<Dielectric Constant>

The dielectric constant was measured in conformity with ASTMD 150. Measurement conditions were set at 1 MHz and 20°C.

(Example 1)

Polystyrene films (PS films; dielectric constant: 2.5) with a thickness of 200 $\mu$m were fabricated by a spin casting method. Thereafter, on a surface of each of the films, a sample with an area of 5 mm square was fabricated by the nanoimprinting method. On the sample, columnar protrusions with a tip end radius of 90 nm and a length of 1.2 $\mu$m were arrayed at an interval of 180 nm.

When the adhesive forces were measured by using these samples, the adhesion strengths became 43.1 N/cm$^2$ in the glass, 68.1 N/cm$^2$ in the iron plate, and 74.7 N/cm$^2$ in the silicon wafer.

(Example 2)

Polystyrene films (dielectric constant: 2.5) with a thickness of 200 $\mu$m were fabricated by the spin casting method. Thereafter, on a surface of each of the films, a sample with an area of 5 mm square was fabricated by the nanoimprinting method. On the sample, columnar protrusions with a tip end radius of 125 nm and a length of 1.2 $\mu$m were arrayed at an interval of 250 nm.

When the adhesive forces were measured by using these samples, the adhesion strengths became 31.0 N/cm$^2$ in the glass, 49.0 N/cm$^2$ in the iron plate, and 53.8 N/cm$^2$ in the silicon wafer.

(Example 3)

Polystyrene films (dielectric constant: 2.5) with a thickness of 200 $\mu$m were fabricated by the spin casting method. Thereafter, on a surface of each of the films, a sample with an area of 5 mm square was fabricated by the nanoimprinting method. On the sample, columnar protrusions with a tip end radius of 250 nm and a length of 1.2 μm were arrayed at an interval of 500 nm.

When the adhesive forces were measured by using these samples, the adhesion strengths became 15.6 N/cm$^2$ in the glass, 24.5 N/cm$^2$ in the iron plate, and 26.9 N/cm$^2$ in the silicon wafer.

(Example 4)

Polystyrene films (dielectric constant: 2.5) with a thickness of 200 μm were fabricated by the spin casting method. Thereafter, on a surface of each of the films, a sample with an area of 5 mm square was fabricated by the nanoimprinting method. On the sample, columnar protrusions with a tip end radius of 90 nm and a length of 1.2 μm were arrayed at an interval of 270 nm.

When the adhesive forces were measured by using these samples, the adhesion strengths became 19.2 N/cm$^2$ in the glass, 30.2 N/cm$^2$ in the iron plate, and 33.3 N/cm$^2$ in the silicon wafer.

(Example 5)

Polystyrene films (dielectric constant: 2.5) with a thickness of 200 μm were fabricated by the spin casting method. Thereafter, on a surface of each of the films, a sample with an area of 5 mm square was fabricated by the nanoimprinting method. On the sample, columnar protrusions with a tip end radius of 90 nm and a length of 1.2 μm were arrayed at an interval of 360 nm.

When the adhesive forces were measured by using these samples, the adhesion strengths became 10.8 N/cm$^2$ in the glass, 17.0 N/cm$^2$ in the iron plate, and 18.7 N/cm$^2$ in the silicon wafer.

(Example 6)

Polytetrafluoroethylene films (PTFE films; dielectric constant: 2.1) with a thickness of 200 μm were fabricated by the spin casting method. Thereafter, on a surface of each of the films, a sample with an area of 5 mm square was fabricated by the nanoimprinting method. On the sample, columnar protrusions with a tip end radius of 90 nm and a length of 1.2 μm were arrayed at an interval of 180 nm.

When the adhesive forces were measured by using these samples, the adhesion strengths became 33.2 N/cm$^2$ in the glass, 52.3 N/cm$^2$ in the iron plate, and 57.4 N/cm$^2$ in the silicon wafer.

(Example 7)

6-Nylon films (PA6 films; dielectric constant: 3.3) with a thickness of 200 μm were fabricated by the spin casting method. Thereafter, on a surface of each of the films, a sample with an area of 5 mm square was fabricated by the nanoimprinting method. On the sample, columnar protrusions with a tip end radius of 90 nm and a length of 1.2 μm were arrayed at an interval of 180 nm.

When the adhesive forces were measured by using these samples, the adhesion strengths became 66.0 N/cm$^2$ in the glass, 103.9 N/cm$^2$ in the iron plate, and 114.2 N/cm$^2$ in the silicon wafer.

(Example 8)

6-Nylon films (dielectric constant: 3.3) with a thickness of 200 μm were fabricated by the spin casting method. Thereafter, on a surface of each of the films, a sample with an area of 5 mm square was fabricated by the nanoimprinting method. On the sample, columnar protrusions with a tip end radius of 90 nm and a length of 1.2 μm were arrayed at an interval of 270 nm.

When the adhesive forces were measured by using these samples, the adhesion strengths became 25.6 N/cm$^2$ in the glass, 46.2 N/cm$^2$ in the iron plate, and 50.7 N/cm$^2$ in the silicon wafer.

(Example 9)

6-Nylon films (dielectric constant: 3.3) with a thickness of 200 μm were fabricated by the spin casting method. Thereafter, on a surface of each of the films, a sample with an area of 5 mm square was fabricated by the nanoimprinting method. On the sample, columnar protrusions with a tip end radius of 90 nm and a length of 1.2 μm were arrayed at an interval of 360 nm.

When the adhesive forces were measured by using these samples, the adhesion strengths became 14.4 N/cm$^2$ in the glass, 26.0 N/cm$^2$ in the iron plate, and 28.5 N/cm$^2$ in the silicon wafer.

(Example 10)

Vinyl chloride films (dielectric constant: 3.2) with a thickness of 200 μm were fabricated by the spin casting method. Thereafter, on a surface of each of the films, a sample with an area of 5 mm square was fabricated by the nanoimprinting method. On the sample, columnar protrusions with a tip end radius of 90 nm and a length of 1.2 μm were arrayed at an interval of 180 nm.

When the adhesive forces were measured by using these samples, the adhesion strengths became 46.4 N/cm$^2$ in the glass, 73.0 N/cm$^2$ in the iron plate, and 80.3 N/cm$^2$ in the silicon wafer.

(Example 11)

Polypropylene films (PP films; dielectric constant: 2.3) with a thickness of 200 μm were fabricated by the spin casting method. Thereafter, on a surface of each of the films, a sample with an area of 5 mm square was fabricated by the nanoimprinting method. On the sample, columnar protrusions with a tip end radius of 90 nm and a length of 1.2 μm were arrayed at an interval of 180 nm.

When the adhesive forces were measured by using these samples, the adhesion strengths became 43.5 N/cm$^2$ in the glass, 68.5 N/cm$^2$ in the iron plate, and 75.3 N/cm$^2$ in the silicon wafer.

(Example 12)

Polypropylene films (dielectric constant: 2.3) with a thickness of 200 $\mu$m were fabricated by the spin casting method. Thereafter, on a surface of each of the films, a sample with an area of 5 mm square was fabricated by the nanoimprinting method. On the sample, columnar protrusions with a tip end radius of 90 nm and a length of 1.2 $\mu$m were arrayed at an interval of 270 nm.
When the adhesive forces were measured by using these samples, the adhesion strengths became 16.9 N/cm$^2$ in the glass, 30.5 N/cm$^2$ in the iron plate, and 33.5 N/cm$^2$ in the silicon wafer.

(Example 13)

Polypropylene films (dielectric constant: 2.3) with a thickness of 200 $\mu$m were fabricated by the spin casting method. Thereafter, on a surface of each of the films, a sample with an area of 5 mm square was fabricated by the nanoimprinting method. On the sample, columnar protrusions with a tip end radius of 90 nm and a length of 1.2 $\mu$m were arrayed at an interval of 360 nm.
When the adhesive forces were measured by using these samples, the adhesion strengths became 9.5 N/cm$^2$ in the glass, 17.1 N/cm$^2$ in the iron plate, and 18.8 N/cm$^2$ in the silicon wafer.

(Example 14)

Polystyrene films (dielectric constant: 2.5) with a thickness of 200 $\mu$m were fabricated by the spin casting method. Thereafter, on a surface of each of the films, a sample with an area of 5 mm square was fabricated by the nanoimprinting method. On the sample, columnar protrusions with a tip end radius of 90 nm and a length of 1.2 $\mu$m were arrayed at an interval of 180 nm.
When the adhesive force in the case where two of the samples were used and the protrusions thereof were contacted with each other was measured, the adhesion strength became 37.6 N/cm$^2$.

(Example 15)

6-Nylon films (dielectric constant: 3.3) with a thickness of 200 $\mu$m were fabricated by the spin casting method. Thereafter, on a surface of each of the films, a sample with an area of 5 mm square was fabricated by the nanoimprinting method. On the sample, columnar protrusions with a tip end radius of 90 nm and a length of 1.2 $\mu$m were arrayed at an interval of 180 nm.
When the adhesive force in the case where two of the samples were used and the protrusions thereof were contacted with each other was measured, the adhesion strength became 88.0 N/cm$^2$.

(Example 16)

Polypropylene films (dielectric constant: 2.3) with a thickness of 200 $\mu$m were fabricated by the spin casting method. Thereafter, on a surface of each of the films, a sample with an area of 5 mm square was fabricated by the nanoimprinting method. On the sample, columnar protrusions with a tip end radius of 90 nm and a length of 1.2 $\mu$m were arrayed at an interval of 180 nm.
When the adhesive force in the case where two of the samples were used and the protrusions thereof were contacted with each other was measured, the adhesion strength became 38.2 N/cm$^2$.

(Example 17)

Polystyrene films with a thickness of 200 $\mu$m were fabricated by the spin casting method. Thereafter, on a surface of each of the films, carbon nanotubes (dielectric constant: 3.3) with a diameter of 1 to 10 nm and a length of 1 $\mu$m were implanted in a density of $4 \times 10^{10}$ cm$^2$, and a sample with an area of 5 mm square was fabricated.
When the adhesive forces were measured by using these samples, the adhesion strengths became 54.7 N/cm$^2$ in the glass, 98.7 N/cm$^2$ in the iron plate, and 108.4 N/cm$^2$ in the silicon wafer.

(Comparative example 1)

Polystyrene films (dielectric constant: 2.5) with a thickness of 200 $\mu$m were fabricated by the spin casting method. Thereafter, on a surface of each of the films, a sample with an area of 5 mm square was fabricated by the nanoimprinting method. On the sample, columnar protrusions with a tip end radius of 600 nm and a length of 1.2 $\mu$m were arrayed at an interval of 1.2 $\mu$m.
When the adhesive forces were measured by using these samples, the adhesion strengths became 2.9 N/cm$^2$ in the glass, 4.5 N/cm$^2$ in the iron plate, and 5.0 N/cm$^2$ in the silicon wafer.

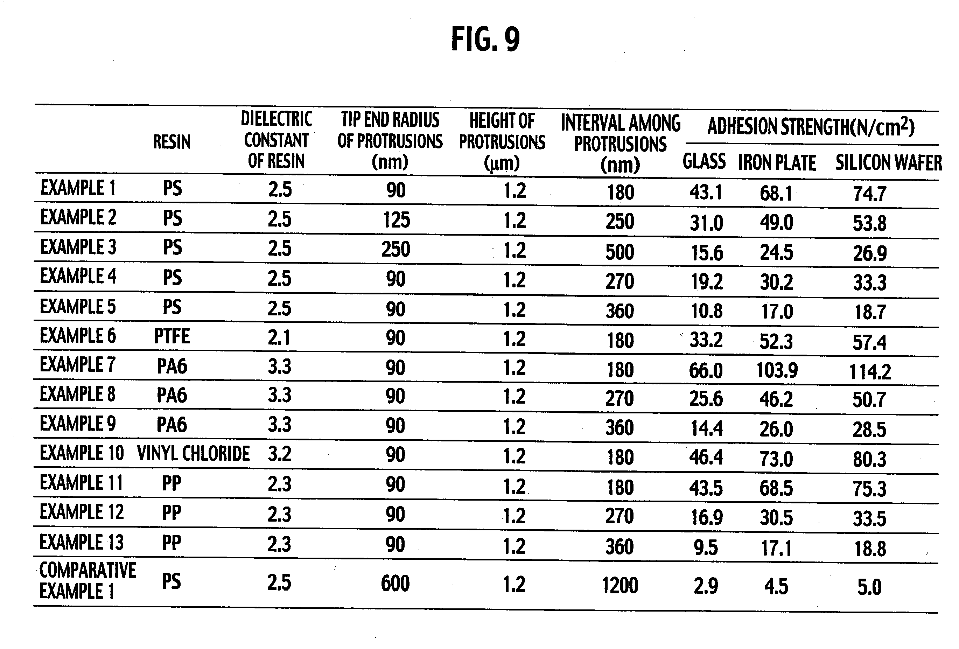

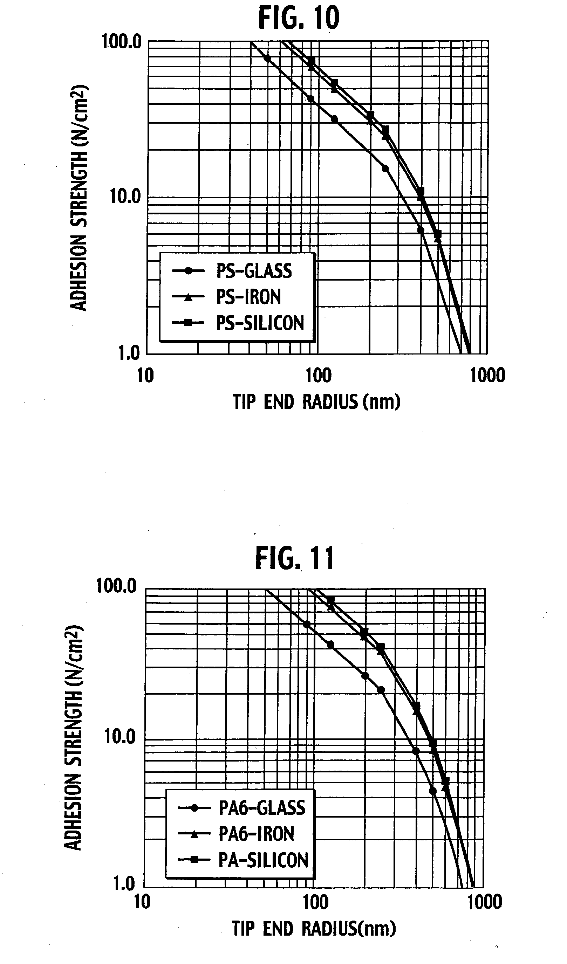

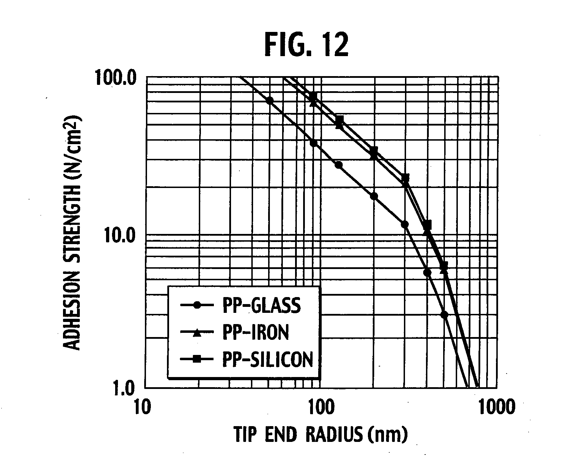

FIG. 9 shows evaluation conditions and evaluation results of Examples 1 to 13 and Comparative example 1. Moreover, FIG. 10 shows relationships between the tip end radii and the adhesion strengths in the case where the material of the protrusions is polystyrene, FIG. 11 shows relationships between the tip end radii and the adhesion strengths in the case where the material of the protrusions is 6-Nylon, and FIG. 12 shows relationships between the tip end radii and the adhesion strengths in the case where the material of the protrusions is polypropylene.
In accordance with the examples and FIGS. 10 to 12, in the case where the tip end radius of the protrusions is 300 nm or less, strong adhesion strength can be obtained whichever of the inorganic material, the metal material and the organic material the adhesion target may be made of. Moreover, in accordance with Examples 1 to 3, as the tip end radius is becoming smaller, the adhesion strength is enhanced. In addition, in accordance with Examples 1, 4 and 5, as the interval among the protrusions is becoming narrower, the adhesion strength is enhanced. This is because, as contact regions between the adhesive structure and the adhesion target are being increased, the van der Waals force acts more strongly between the adhesive structure and the adhesion target.

Moreover, in accordance with Examples 1, 6, 7, 10 and 11, as the dielectric constant of the material composing the protrusions is becoming higher, the adhesion strength is enhanced. This is because, from the above-described expression (1), the van der Waals force rises as the dielectric constant is becoming higher.

Furthermore, from Examples 14 to 16, it is understood that the hook-and-loop fastener using the adhesive structures of the present invention has strong adhesion strength.

Still further, from Example 17, it is understood that strong adhesion strength can be obtained even if the adhesive structure of this application is formed by embedding the separately fabricated protrusions into the surface of the base.

The entire contents of Japanese Patent Application No. 2005-263762 (filed on September 12, 2005) are incorporated herein by reference.

The description has been made above of the contents of the present invention along the embodiments and the examples; however, it is self-obvious to those skilled in the art that the present invention is not limited to the descriptions of these, and that various modifications and improvements are possible. Specifically, it is possible to form the protrusions in the present invention not only on the base but also on the surface of the adhesion target. In this case, there is also an effect that the protrusions are intertwined with each other, and a more robust adhesive structure can be obtained.

INDUSTRIAL APPLICABILITY

The minute protrusions are formed on the surface of the base of the structure or the like, thus making it possible for the structure to adhere onto the opposite member without requiring the adhesive materials such as the adhesive or the adhesion apparatuses. In such a way, simplification and cost reduction of a manufacturing process of industrial products can be realized.

**Claims**

1. An adhesive structure adhering onto an adhesion target, comprising:

   a base; and
   a plurality of protrusions, in which tip ends are spherical with a radius of 300 nm or less, and a radius of cross sections perpendicular to a longitudinal direction is 500 nm or less, the protrusions being provided on a surface of the base.

2. The adhesive structure according to claim 1, wherein the protrusions are composed of a material with a dielectric constant of 2 or more.

3. The adhesive structure according to claim 1, wherein the protrusions are made of a composite material containing a conductive substance.

4. The adhesive structure according to claim 1, wherein the protrusions are composed of resin.

5. The adhesive structure according to claim 1, wherein a bending elastic modulus of the protrusions is 5 GPa or less.

6. The adhesive structure according to claim 1, wherein an aspect ratio of the protrusions is 1 to 15.

7. The adhesive structure according to claim 1, further comprising:

   a thin film in which a film thickness is 300 nm or less, the thin film being coated on the protrusions.

8. The adhesive structure according to claim 7, wherein the thin film is composed of a material with a dielectric constant of 2 or more.

9. The adhesive structure according to claim 7, wherein the thin film is made of a composite material containing a conductive substance.

10. The adhesive structure according to claim 7, wherein the thin film is composed of resin.

11. The adhesive structure according to claim 1, wherein the protrusions are provided in a density of $10^6$ to $10^{11}$ pieces per 1 cm$^2$ of the base.

12. A hook-and-loop fastener, comprising:

    the adhesive structures according to claim 1,

    wherein surfaces of the adhesive structures, on which the protrusions are formed, adhere onto each other.

13. A method of manufacturing an adhesive structure, comprising:

forming protrusions, in which tip ends are spherical with a radius of 300 nm or less, and a radius of cross sections perpendicular to a longitudinal direction is 300 nm or less; and
providing the protrusions on a surface of a base.

14. The method of manufacturing an adhesive structure according to claim 13,
wherein the protrusions are provided by being partially embedded in the surface of the base.

# FIG. 1

EP 1 944 267 A1

# FIG. 2

## FIG. 3

EP 1 944 267 A1

# FIG. 4

(a)      (b)      (c)      (d)      (e)

EP 1 944 267 A1

# FIG. 5

TIP END RADIUS (nm)

EP 1 944 267 A1

FIG. 6

# FIG. 7

# FIG. 8

UV LAMP

8

1

4

## FIG. 9

| | RESIN | DIELECTRIC CONSTANT OF RESIN | TIP END RADIUS OF PROTRUSIONS (nm) | HEIGHT OF PROTRUSIONS (μm) | INTERVAL AMONG PROTRUSIONS (nm) | ADHESION STRENGTH(N/cm$^2$) | | |
|---|---|---|---|---|---|---|---|---|
| | | | | | | GLASS | IRON PLATE | SILICON WAFER |
| EXAMPLE 1 | PS | 2.5 | 90 | 1.2 | 180 | 43.1 | 68.1 | 74.7 |
| EXAMPLE 2 | PS | 2.5 | 125 | 1.2 | 250 | 31.0 | 49.0 | 53.8 |
| EXAMPLE 3 | PS | 2.5 | 250 | 1.2 | 500 | 15.6 | 24.5 | 26.9 |
| EXAMPLE 4 | PS | 2.5 | 90 | 1.2 | 270 | 19.2 | 30.2 | 33.3 |
| EXAMPLE 5 | PS | 2.5 | 90 | 1.2 | 360 | 10.8 | 17.0 | 18.7 |
| EXAMPLE 6 | PTFE | 2.1 | 90 | 1.2 | 180 | 33.2 | 52.3 | 57.4 |
| EXAMPLE 7 | PA6 | 3.3 | 90 | 1.2 | 180 | 66.0 | 103.9 | 114.2 |
| EXAMPLE 8 | PA6 | 3.3 | 90 | 1.2 | 270 | 25.6 | 46.2 | 50.7 |
| EXAMPLE 9 | PA6 | 3.3 | 90 | 1.2 | 360 | 14.4 | 26.0 | 28.5 |
| EXAMPLE 10 | VINYL CHLORIDE | 3.2 | 90 | 1.2 | 180 | 46.4 | 73.0 | 80.3 |
| EXAMPLE 11 | PP | 2.3 | 90 | 1.2 | 180 | 43.5 | 68.5 | 75.3 |
| EXAMPLE 12 | PP | 2.3 | 90 | 1.2 | 270 | 16.9 | 30.5 | 33.5 |
| EXAMPLE 13 | PP | 2.3 | 90 | 1.2 | 360 | 9.5 | 17.1 | 18.8 |
| COMPARATIVE EXAMPLE 1 | PS | 2.5 | 600 | 1.2 | 1200 | 2.9 | 4.5 | 5.0 |

EP 1 944 267 A1

## FIG. 10

## FIG. 11

# FIG. 12

## INTERNATIONAL SEARCH REPORT

| | International application No. |
|---|---|
| | PCT/JP2006/315809 |

A. CLASSIFICATION OF SUBJECT MATTER
*B82B1/00*(2006.01)i, *B82B3/00*(2006.01)i, *F16B5/07*(2006.01)i, *A44B18/00*
(2006.01)i

According to International Patent Classification (IPC) or to both national classification and IPC

B. FIELDS SEARCHED

Minimum documentation searched (classification system followed by classification symbols)
B82B1/00-3/00, F16B5/00-5/12, A44B18/00

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)
JST7580(JDream2), JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2003/095190 A1  (CALIFORNIA, THE REGENTS OF THE UNIVERSITY),<br>20 November, 2003 (20.11.03),<br>Full text; all drawings<br>& EP 1511618 A1        & JP 2006/505414 A<br>& US 2003/208888 A1     & US 2005/181170 A1 | 1-6,11,13,14<br>7-10,12 |
| Y | JP 2003-204809 A  (3M Innovative Properties Co.),<br>22 July, 2003 (22.07.03),<br>Par. No. [0045]; Fig. 8<br>& US 2003/126724 A1      & WO 03/59109 A1 | 7-10 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>31 October, 2006 (31.10.06) | Date of mailing of the international search report<br>07 November, 2006 (07.11.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/315809

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-526382 A (Minnesota Mining and Manufacturing Co.), 09 September, 2003 (09.09.03), Full text; all drawings & EP 1041901 A1        & US 6159596 A & WO 99/32005 A1 | 12 |
| A | JP 2003-519267 A (The Regents of the University of California), 17 June, 2003 (17.06.03), Full text; all drawings & EP 1241930 A2         & US 6737160 B1 & US 2004/005454 A1      & US 2005/072509 A1 & US 2006/078725 A1      & WO 01/49776 A2 | 1,11,13,14 |
| A | US 2003/0124312 A1 (Kellar Autumn), 03 July, 2003 (03.07.03), Full text; all drawings & WO 03/097702 A2 | 1,11,13,14 |
| A | JP 2002-65318 A (Masao MUNE), 05 March, 2002 (05.03.02), Full text; all drawings (Family: none) | 1 |
| A | US 6656319 B1 (William C. Boyd), 02 December, 2003 (02.12.03), Full text; all drawings & WO 02/34855 A1 | 14 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004170935 A
- JP 2005263762 A